# EUROPÄISCHE PATENTANMELDUNG

(11) **EP 4 668 570 A1**
(43) Veröffentlichungstag der Anmeldung: **24.12.2025**
(21) Anmeldenummer: 24182860.7
(22) Anmeldetag: 18.06.2024
(51) Int. Cl.: H02S 10/00, H02S 20/10

(54) **VERFAHREN ZUR MONTAGE EINER MEHRZAHL VON PHOTOVOLTAIKMODULEN AUF ZUMINDEST EINEM UNTERGRUND SOWIE MODULBAUGRUPPE**

(71) Anmelder: Goldbeck Solar GmbH, 69493 Hirschberg an der Bergstrasse (DE)
(72) Erfinder: Steinheiser, Ralf, 68542 Heddesheim (DE); Pietrzak, Arnd, 10435 Berlin (DE); Kutter, Kenas, 01445 Radebeul (DE)
(74) Vertreter: Cohausz & Florack

(57) **Zusammenfassung**

Die Erfindung betrifft ein Verfahren zur Montage einer Mehrzahl von Photovoltaikmodulen auf zumindest einem Untergrund. Die Erfindung betrifft ebenfalls eine Modulbaugruppe umfassend: eine Mehrzahl von Photovoltaikmodulen (10) und zumindest einen Modulträger (14, 36), wobei der zumindest eine Modulträger (14, 36) zumindest ein Montageprofil (38) umfasst, wobei das Montageprofil (38) einen ersten Verbindungsabschnitt (44) zur Verbindung des Montageprofils (38) mit der Mehrzahl von Photovoltaikmodulen (10) aufweist, und wobei das Montageprofil (38) einen zweiten Verbindungsabschnitt (46) zur Verbindung des Montageprofils (38) mit zumindest einer auf einem Untergrund befestigten Unterkonstruktion (26) aufweist.

## Beschreibung

Die Erfindung betrifft ein Verfahren zur Montage einer Mehrzahl von Photovoltaikmodulen auf zumindest einem Untergrund. Die Erfindung betrifft ebenfalls eine Modulbaugruppe umfassend eine Mehrzahl von Photovoltaikmodulen und zumindest einen Modulträger.

Die Bedeutung von Photovoltaikmodulen für die Transition von fossilen Brennstoffen hin zu erneuerbaren Energien ist dem Fachmann wohl bekannt. Dieser Übergang von fossilen Brennstoffen hin zu erneuerbaren Energien, insbesondere der Nutzung von Solarenergie, bringt allerdings einige Herausforderungen mit sich. Eine Herausforderung bei diesem Übergang ist die Senkung der Kosten für die Installation von Photovoltaikmodulen.

Beispielsweise umfassen große Solarparks mehrere Tausende von Photovoltaikmodulen, die über ein mehrere Hektar großes Gelände verteilt und elektrisch zumindest teilweise gekoppelt sind, um die erzeugte Energie bspw. in ein Stromnetz einzuspeisen. Um diese Menge an Photovoltaikmodulen zuverlässig montieren zu können, ist eine große Menge an technisch qualifiziertem Personal vonnöten.

Dies verursacht einerseits hohe Personalkosten und andererseits ist es oftmals schwierig, genug geschultes Personal ausfindig zu machen, die die für die Montage von Photovoltaikmodulen benötige Arbeitsleistung erbringen können.

Davon ausgehend hat sich daher die Aufgabe gestellt, ein Verfahren zur Montage einer Mehrzahl von Photovoltaikmodulen sowie eine Modulbaugruppe anzugeben, welche eine Montage einer Mehrzahl von Photovoltaikmodulen in kostengünstiger sowie ressourcensparender Weise ermöglicht.

Gemäß einem ersten Aspekt wird die vorgenannte Aufgabe gelöst durch ein Verfahren zur Montage einer Mehrzahl von Photovoltaikmodulen auf zumindest einem Untergrund umfassend die nachfolgenden Schritte: Bereitstellen einer Mehrzahl von Photovoltaikmodulen sowie einer Mehrzahl von Modulträgern; wobei ein Modulträger jeweils mindestens ein Montageprofil umfasst; Vormontage der Mehrzahl von Photovoltaikmodulen und der Mehrzahl von Modulträgern zu einer Mehrzahl von Modulbaugruppen; wobei eine Modulbaugruppe jeweils eine Mehrzahl von Photovoltaikmodulen und zumindest einen Modulträger umfasst; und wobei die Mehrzahl von Photovoltaikmodulen mittels des zumindest einen Modulträgers, insbesondere mittels des mindestens einen Montageprofils des zumindest einen Modulträgers, miteinander verbunden werden; Lagerung, insbesondere gestapelte Lagerung, der Mehrzahl von Modulbaugruppen auf mindestens einer Transporteinheit; wobei die Montageprofile der Mehrzahl von Modulträgern derart ausgestaltet sind, dass die Mehrzahl von Modulbaugruppen zumindest teilweise aufeinander und/oder nebeneinander stapelbar sind; und Transport der Mehrzahl von Modulbaugruppen, insbesondere mittels der mindestens einen Transporteinheit, zu mindestens einer Montageposition; Montage der Mehrzahl von Modulbaugruppen auf zumindest einer auf einem Untergrund befestigten Unterkonstruktion.

Hierdurch kann ein Verfahren ermöglicht werden, welches in vorteilhafter Weise eine Montage von einer Mehrzahl von Photovoltaikmodulen ermöglicht, wobei diese zunächst möglichst automatisiert mit Hilfe von zumindest einem Montageprofil eines Modulträgers zu Modulbaugruppen vormontiert werden können und die Montageprofile der Modulträger derart ausgebildet sind, dass eine Stapelung zumindest teilweise aufeinander und/oder nebeneinander möglich ist.

Anschließend kann die Mehrzahl der auf der mindestens einen Transporteinheit gelagerten Modulbaugruppen zu einer Montageposition gefahren werden, wobei die Mehrzahl von Modulbaugruppen an der Montageposition auf zumindest einer auf einem Untergrund befestigten Unterkonstruktion montiert werden kann.

Beispielsweise kann es sich bei der auf einem Untergrund befestigten Unterkonstruktion um mindestens einen Längsträger, bevorzugt zumindest zwei Längsträger, handeln, welche insbesondere jeweils mittels einer Mehrzahl an Fundamentpfosten in dem Untergrund befestigt sind.

Durch die Vormontage der Mehrzahl von Photovoltaikmodulen und der Mehrzahl von Modulträgern zu einer Mehrzahl von Modulbaugruppen, insbesondere an einer zentralen Vormontageposition, wird es ermöglicht, die logistischen Prozesse sowie die Arbeitsabläufe während der Montage der Photovoltaikmodule zu optimieren. Beispielsweise kann ein aufwendiger, separater Transport von einzelnen Modulen bis zur Endmontageposition vermieden werden. Ebenfalls werden weniger Arbeiter benötigt, die weite Wege zurücklegen müssen, um die Photovoltaikmodule an der Endmontageposition mit Modulträgern zu verbinden und anschließend auf der Unterkonstruktion zu befestigen.

Beispielsweise können die Mehrzahl von Photovoltaikmodulen und die Mehrzahl von Modulträgern zu einer Mehrzahl von Modulbaugruppen in einer sogenannten "Field-Factory" montiert werden, so dass im Rahmen dieser vorteilhafte Fertigungsbedingungen für die Vormontage zentral an einem Ort zur Verfügung gestellt werden können.

Vorzugsweise werden jeweils drei Photovoltaikmodule durch Modulträger zu einer Modulbaugruppe verbunden, wobei insbesondere zumindest zwei Montageprofile für eine Modulbaugruppe verwendet werden. Beispielsweise umfasst ein Modulträger damit zwei Montageprofile. Es ist allerdings ebenfalls denkbar, dass ein Modulträger nur ein Montageprofil umfasst und insofern zwei Modulträger für die Vormontage von drei Photovoltaikmodulen zu einer Modulbaugruppe verwendet werden.

Eine bevorzugte Ausgestaltung ist dadurch gekennzeichnet, dass die Vormontage ferner umfasst: zumindest teilweise automatisierte Vormontage der Mehrzahl von Photovoltaikmodulen und der Mehrzahl von Modulträgern zu einer Mehrzahl von Modulbaugruppen mittels zumindest eines Manipulationsroboters. Beispielsweise kann eine solche Vormontage auf einer im Wesentlichen automatisierten Produktionsstraße abgebildet werden. Beispielsweise wird hierfür zumindest ein Manipulationsroboter und zumindest eine Rollenbahn verwendet. Indem die Vormontage an einem zentralen Ort abgebildet wird, wird es ermöglicht eine Infrastruktur vorzusehen, die schnell arbeitet und einen hohen Automatisierungsgrad aufweist.

Vorzugsweise weist die Mehrzahl von Photovoltaikmodulen und/oder die Mehrzahl von Modulträgern eine Indexierung auf, wobei die Position der Mehrzahl von Photovoltaikmodulen und/oder der Mehrzahl von Modulträgern mittels einer Erfassung der Indexierung durch zumindest ein Sensormittel erfasst bzw. erkannt wird. Die Indexierung kann beispielsweise durch eine geometrische Ausprägung und/oder durch eine farbliche Markierung umgesetzt werden. Mittels der Indexierung kann in vorteilhafter Weise eine zumindest teilweise automatisierte Vormontage ermöglicht werden, da die Position der Mehrzahl von Photovoltaikmodulen und/oder der Mehrzahl von Modulträgern zuverlässig erfasst werden kann. Bei dem zumindest einen Sensormittel kann es sich beispielsweise um zumindest eine Kamera, zumindest einen Scanner, zumindest einen Lasersensor, zumindest einen Bewegungssensor und/oder zumindest einen RFID-Sensor handeln. Bei der Vorsehung von zumindest einem RFID-Sensor ist es bevorzugt, dass die Mehrzahl von Photovoltaikmodulen und/oder die Mehrzahl von Modulträgern als Indexierung zumindest einen RFID-Transponder aufweist. Beispielsweise kann es ebenfalls bevorzugt sein, falls ein Barcode als Indexierung vorgesehen ist. Beispielsweise können ebenfalls mechanische Sensormittel vorgesehen werden. Bei mechanischen Sensormitteln kann es sich beispielsweise um Sensormittel handeln, die sich mechanisch verformen, und insofern bspw. eine Indexierung erkennen können. Beispielsweise können die mechanischen Sensormittel Fühler sein, die bei einer Kontaktierung einer Oberfläche ein entsprechendes Signal verursachen.

Beispielsweise erfolgt die Bestückung einer Vormontagestation mittels des zumindest einen Manipulationsroboters im Wesentlichen automatisiert, wobei insbesondere die Mehrzahl von Modulträgern und/oder die Mehrzahl von Photovoltaikmodulen der Vormontagestation mittels des Manipulationsroboters automatisiert zugeführt wird.

Vorzugsweise verbindet der zumindest eine Manipulationsroboter die Mehrzahl von Modulträgern und/oder die Mehrzahl von Photovoltaikmodulen der Vormontagestation mittels zumindest eines Verbindungsmittels, insbesondere mittels zumindest einer Klemme.

Beispielsweise können die Mehrzahl von Modulträgern der Vormontagestation manuell zugeführt werden, wobei die Mehrzahl von Photovoltaikmodulen der Vormontagestation automatisiert zugeführt und mittels der Mehrzahl von Modulträgern, vorzugsweise automatisiert, verbunden werden.

Eine weitere bevorzugte Ausgestaltung ist dadurch gekennzeichnet, dass die Vormontage ferner umfasst: Verbinden der Mehrzahl von Photovoltaikmodulen und der Mehrzahl von Modulträgern zu einer Mehrzahl von Modulbaugruppen mittels einer formschlüssigen, kraftschlüssigen und/oder reibschlüssigen Verbindung, insbesondere mittels einer Mehrzahl von Verbindungsmitteln. Dies ermöglicht eine zuverlässige Verbindung der Komponenten einer Modulbaugruppe. Beispielsweise kann die Mehrzahl von Photovoltaikmodulen und/oder die Mehrzahl von Modulträgern mittels einer Schraubverbindung, mittels einer Nietverbindung, mittels einer Klemmverbindung, mittels Clinchen und/oder mittels einer Verklebung hergestellt werden.

Beispielsweise kann eine Verbindung der Mehrzahl von Photovoltaikmodulen und der Mehrzahl von Modulträgern zu einer Mehrzahl von Modulbaugruppen durch eine mechanische Umformung der Mehrzahl von Photovoltaikmodulen und/oder der Mehrzahl von Modulträgern ermöglicht werden. Hierdurch kann in vorteilhafter Weise insbesondere auf zusätzliche Verbindungsmittel verzichtet werden.

Beispielsweise kann eine Verbindung der Mehrzahl von Photovoltaikmodulen und der Mehrzahl von Modulträgern zu einer Mehrzahl von Modulbaugruppen mittels einer Rastfunktion ermöglicht werden.

Eine weitere bevorzugte Ausgestaltung ist dadurch gekennzeichnet, dass die Vormontage ferner umfasst: Automatisierte Zuführung der Mehrzahl von Verbindungsmitteln, insbesondere mittels eines vorkonfektionierten Magazins. Dies ermöglicht eine weitere Automatisierung der Vormontage. Beispielsweise kann die Mehrzahl von Verbindungsmitteln auch lose als Schüttgut in eine Sortier- und Zuführanlage gegeben werden, wobei diese anschließend, insbesondere automatisiert, zugeführt werden.

Eine weitere bevorzugte Ausgestaltung ist dadurch gekennzeichnet, dass die Vormontage ferner umfasst: Erfassen der Mehrzahl von Photovoltaikmodulen und/oder der Mehrzahl von Modulträgern; und Vergleichen der erfassten Mehrzahl von Photovoltaikmodulen und/oder der erfassten Mehrzahl von Modulträgern mit in einer Datenbank gespeicherten Referenzwerten. Hierdurch kann beispielsweise eine Qualitätskontrolle der Mehrzahl von Photovoltaikmodulen und/oder der Mehrzahl von Modulträgern ermöglicht werden.

Beispielsweise kann optional ein Fehlersignal ausgegeben werden, falls die erfassten Abmaße der Mehrzahl von Photovoltaikmodulen und/oder die erfassten Abmaße der Mehrzahl von Modulträgern außerhalb der in der Datenbank gespeicherten Referenzwerte liegen. Hierdurch kann ein Bediener der Vormontagestation überprüfen, ob die jeweiligen Photovoltaikmodule und/oder die Modulträger ausgetauscht werden müssen oder ob diese für die Vormontage und/oder die Endmontage geeignet sind.

Nach einer bevorzugten Ausgestaltung werden die Mehrzahl von Photovoltaikmodulen und/oder die Mehrzahl von Modulträgern beispielsweise mittels eines Erfassungsmittels, insbesondere mittels einer Kamera, erfasst. Insbesondere werden nach Erfassen der Mehrzahl von Photovoltaikmodulen und/oder der Mehrzahl von Modulträgern zunächst Merkmale des jeweiligen Photovoltaikmoduls und/oder des jeweiligen Modulträgers identifiziert. Beispielsweise kann es sich bei den identifizierten Merkmalen um Merkmale handeln, die einen Rückschluss auf die Qualität des jeweiligen Photovoltaikmoduls und/oder des jeweiligen Modulträgers erlauben. Hierdurch kann im Rahmen der Vormontage eine Art Wareneingangskontrolle durchgeführt werden.

Beispielsweise kann es sich bei den identifizierten Merkmalen um eine Identifikationskennung, wie beispielsweise einen Barcode, eine Seriennummer oder einen RFID-Transponder handeln, um einige nicht limitierende Beispiele zu nennen. Nach Erfassung einer solchen Identifikationskennung kann vorzugweise ein digitaler Zwilling des jeweiligen Photovoltaikmoduls und/oder des jeweiligen Modulträgers erstellt werden und anhand der Fertigungsdaten analysiert werden, an welcher Position die Modulbaugruppe umfassend das jeweilige Photovoltaikmodul und/oder den jeweiligen Modulträger eingebaut wird. Sollte demnach beispielsweise im Nachhinein festgestellt werden, dass bestimmte Chargen fehlerhaft waren, so ermöglicht dies eine leichte Identifikation der jeweiligen Modulbaugruppen, so dass diese in kostensparender Weise ausgetauscht werden können.

Eine weitere bevorzugte Ausgestaltung ist dadurch gekennzeichnet, dass die Vormontage ferner umfasst: Einschieben und/oder Auflegen der Mehrzahl von Photovoltaikmodulen in zumindest ein Montageprofil, insbesondere in zumindest zwei Montageprofile; wobei die Mehrzahl von Photovoltaikmodulen vorzugweise nach Einschieben und/oder Auflegen dieser im Wesentlichen formschlüssig fixiert werden. Hierdurch kann in montagetechnisch günstiger Weise eine Verbindung zwischen der Mehrzahl von Photovoltaikmodulen und dem zumindest einen Montageprofil ermöglicht werden.

Es ist bevorzugt, dass die Mehrzahl von Photovoltaikmodulen vorzugweise durch Eindrehen des zumindest einen Montageprofils um eine Achse in Einschubrichtung des zumindest einen Montageprofils im Wesentlichen formschlüssig fixiert werden. Hierdurch kann beispielsweise eine Lösung zur Verfügung gestellt werden, die mit nur wenigen oder keinen zusätzlichen Verbindungsmitteln auskommt, was einerseits zu reduzierten Kosten und andererseits zu einer simpleren Montage führt.

Nach einer weiteren bevorzugten Ausgestaltung umfasst die Vormontage ferner: Einschieben und/oder Auflegen der Mehrzahl von Photovoltaikmodulen in zumindest ein Montageprofil, insbesondere in zumindest zwei Montageprofile. Vorzugweise wird die Mehrzahl von Photovoltaikmodulen durch Einrasten in eine Rastlippe, vorzugsweise in eine in dem zumindest einen Montageprofil integrierte Rastlippe, insbesondere integral ausgebildete Rastlippe, formschlüssig verbunden. Vorzugsweise wird die Mehrzahl von Photovoltaikmodulen durch eine partielle mechanische Umformung in eine Lippe, vorzugsweise eine in dem zumindest einen Montageprofil integrierte Lippe, vorzugsweise integral ausgebildete Lippe, durch Umformung formschlüssig verbunden.

Nach einer weiteren bevorzugten Ausgestaltung umfasst die Vormontage ferner: Einschieben und/oder Auflegen der Mehrzahl von Photovoltaikmodulen in zumindest ein Montageprofil, insbesondere in zumindest zwei Montageprofile, wobei die Mehrzahl von Photovoltaikmodulen vorzugsweise mittels zumindest eines Verbindungselements, insbesondere mittels zumindest eines Klemmmittels, mit dem zumindest einen Montageprofil, insbesondere mit zwei Montageprofilen, verbunden wird.

Eine weitere bevorzugte Ausgestaltung ist dadurch gekennzeichnet, dass die Mehrzahl von Modulbaugruppen mittels zumindest eines Verlegefahrzeugs auf der zumindest einen Unterkonstruktion montiert wird, wobei das zumindest eine Verlegefahrzeug vorzugsweise die Mehrzahl von Modulbaugruppen auf der mindestens einen Transporteinheit im Wesentlichen automatisiert erkennt; wobei zumindest ein Manipulator des zumindest einen Verlegefahrzeugs vorzugsweise die Mehrzahl von Modulbaugruppen im Wesentlichen automatisiert von der mindestens einen Transporteinheit entnimmt. Dies ermöglich ferner eine im Wesentlichen automatisierte Anordnung der Mehrzahl von Modulbaugruppen auf der zumindest einen Unterkonstruktion. Auf der Unterkonstruktion montiert bedeutet im vorliegenden Sinne nicht zwingend, dass bereits sämtliche Montageschritte abgeschlossen sind. Beispielsweise kann es sich bei einem bloßen Ablegen der Mehrzahl von Moduleinheiten auf der zumindest einen Unterkonstruktion auch um ein Montieren der Mehrzahl von Moduleinheiten handeln. Vorzugsweise wird die Mehrzahl von Modulbaugruppen nahe ihrer Endmontageposition von dem zumindest einen Manipulator entnommen und mit Entnahmeschritt auf der jeweiligen Endmontageposition auf der Unterkonstruktion montiert.

Eine bevorzugte Ausgestaltung ist dadurch gekennzeichnet, dass der zumindest eine Manipulator die Mehrzahl von Modulbaugruppen insbesondere mittels zumindest einem Vakuumsaugelement, mittels form- und kraftschlüssiger mechanischer Verbindung und/oder mittels Magnetkraft von der mindestens einen Transporteinheit entnimmt. Hierdurch kann die Mehrzahl von Modulbaugruppen in zuverlässiger Weise von der zumindest einen Transporteinheit entnommen und vorzugsweise auf der zumindest einen Unterkonstruktion abgelegt werden. Vorzugsweise wird die Mehrzahl von Modulbaugruppen nicht nur mittels des Manipulators entnommen, sondern vorzugsweise auch auf der zumindest einen Unterkonstruktion mittels des Manipulators (vor-)montiert.

Eine bevorzugte Ausgestaltung ist dadurch gekennzeichnet, dass das zumindest eine Verlegefahrzeug die mindestens eine Montageposition und/oder die zumindest Unterkonstruktion erfasst, wobei der zumindest eine Manipulator mindestens eine Modulbaugruppe zu der Montageposition transportiert, wobei das zumindest eine Verlegefahrzeug vorzugsweise mit dem zumindest einen Manipulator gekoppelt ist, insbesondere elektronisch oder mechanisch gekoppelt ist, und wobei der zumindest eine Manipulator die mindestens eine Modulbaugruppe in der Montageposition auf der Unterkonstruktion ablegt bzw. diese auf der Unterkonstruktion montiert

Beispielsweise kann ein Abstand der abzulegenden Modulbaugruppe zu der zuvor montierten Modulbaugruppe mittels zumindest eines Sensors überprüft und justiert werden. Zur Ablage der zumindest einen Modulbaugruppe kann die Fixierung der Modulbaugruppe an dem Manipulator gelöst werden und anschließend die Modulbaugruppe aufgrund der Schwerkraft mittels eines zweiten Verbindungsabschnitts, insbesondere mittels eines hakenförmig ausgebildeten zweiten Verbindungsabschnitts des Montageprofils der Modulbaugruppe bzw. eines hakenförmig ausgebildeten und mit dem zweiten Verbindungsabschnitt verbundenen Haltemittels in die Unterkonstruktion, insbesondere in Längsträger der Unterkonstruktion, eingreifen und damit die Lage der Modulbaugruppe gegen Abrutschen und auch gegen abhebende Lasten sichern. Nachfolgend kann der Ablegevorgang des Verlegefahrzeugs der jeweiligen Modulbaugruppe beendet sein. In ähnlicher Weise kann ebenfalls eine Befestigung des zumindest einen Modulträgers an der Mehrzahl von Photovoltaikmodulen automatisiert erfolgen. Beispielsweise ist auch eine vollständig manuelle Durchführung des Verlegeprozesses möglich.

Eine weitere bevorzugte Ausgestaltung ist dadurch gekennzeichnet, dass die Mehrzahl von Modulbaugruppen manuell und/oder automatisiert kraftschlüssig, stoffschlüssig und/oder reibschlüssig an der zumindest einen Unterkonstruktion befestigt wird. Beispielsweise können die Mehrzahl von Modulgruppen mittels Bohrschrauben, mittels metrischer Schrauben mit Mutter, mittels Klemmen, mittels Blindnieten, mittels Stanznieten, mittels Clinchens, mittels Fließbohrschrauben und/oder mittels Schließringbolzen manuell und/oder automatisiert befestigt werden, um einige nicht limitierende Ausführungsbeispiele zu nennen.

Eine weitere bevorzugte Ausgestaltung ist dadurch gekennzeichnet, dass das zumindest eine Verlegefahrzeug die Modulbaugruppen jeweils an einer Montageposition auf der Unterkonstruktion ablegt, wobei die Modulbaugruppen nachfolgend von der Montageposition zu der Endmontageposition zumindest teilweise mittels der Unterkonstruktion transportiert werden. Da die Unterkonstruktion zur Montage der Modulbaugruppen auf einem Untergrund vorhanden ist, kann diese in vorteilhafter Weise auch zum Transport der Modulbaugruppen an die Endmontageposition genutzt werden. Dies ermöglicht eine in montagetechnischer Sicht vereinfachte Montage der Modulbaugruppen, da die Montage aller Modulbaugruppen einer Unterkonstruktion an derselben Stelle durchgeführt werden kann. Beispielsweise sind die Modulbaugruppen und/oder die Unterkonstruktion derart ausgestaltet, dass ein Verschieben der Modulbaugruppen auf der Unterkonstruktion ermöglicht wird. Beispielsweise kann allerdings auch ein zusätzliches Transportgestell vorgesehen werden, mittels welchem die Modulbaugruppen auf der Unterkonstruktion zu der Endmontageposition transportiert werden.

Eine weitere bevorzugte Ausgestaltung ist dadurch gekennzeichnet, dass die zumindest eine Transporteinheit die Mehrzahl der Modulbaugruppen entlang einer länglichen Erstreckung der zumindest einen Unterkonstruktion transportiert, wobei die Modulbaugruppen jeweils an ihrer Endmontageposition auf der Unterkonstruktion abgelegt und/oder montiert werden. Dies ermöglicht eine konstruktiv wenig aufwendige Ausgestaltung der Modulbaugruppen bzw. der Unterkonstruktion, wodurch diese weniger fehleranfällig sein kann. Ebenfalls kann beispielsweise der Ablegeschritt der jeweiligen Modulbaugruppe zusammen mit dem Endmontageschritt, also der Befestigung der Modulbaugruppe an der Unterkonstruktion im Wesentlichen simultan durchgeführt werden, was in montagetechnischer Hinsicht vorteilhaft sein kann.

Gemäß einem zweiten Aspekt wird die vorgenannte Aufgabe gelöst durch eine Modulbaugruppe umfassend: eine Mehrzahl von Photovoltaikmodulen und zumindest einen Modulträger, wobei der zumindest eine Modulträger zumindest ein Montageprofil umfasst, wobei das Montageprofil einen ersten Verbindungsabschnitt zur Verbindung des Montageprofils mit der Mehrzahl von Photovoltaikmodulen aufweist, und wobei das Montageprofil einen zweiten Verbindungsabschnitt zur Verbindung des Montageprofils mit zumindest einer auf einem Untergrund befestigten Unterkonstruktion aufweist, wobei der zweite Verbindungsabschnitt derart ausgestaltet ist, dass dieser auf der Oberfläche einer Mehrzahl von Photovoltaikmodulen, insbesondere auf der Oberfläche einer Mehrzahl von Photovoltaikmodulen einer weiteren Modulbaugruppe, zumindest teilweise stapelbar ist. Eine zumindest teilweise stapelbare Lagerung der einzelnen Modulbaugruppen aufeinander ermöglicht die Vormontage der Modulbaugruppen an einem zentralen Ort und eine anschließende Stapelung der Modulbaugruppen auf einer Transporteinheit, so dass die vormontierten Montagegruppen nachfolgend zu einer Montageposition verfahren werden können. Durch die Vormontage der Mehrzahl von Photovoltaikmodulen und der Mehrzahl von Modulträgern zu einer Mehrzahl von Modulbaugruppen, insbesondere an einer zentralen Vormontageposition, wird es ermöglicht, die logistischen Prozesse sowie die Arbeitsabläufe während der Montage der Photovoltaikmodule weiter zu optimieren.

Eine Ausgestaltung des zweiten Verbindungsabschnitts derart, dass dieser auf der Oberfläche einer Mehrzahl von Photovoltaikmodulen einer weiteren Modulbaugruppe stapelbar ist, bedeutet vorliegend insbesondere, dass die beanspruchte Modulbaugruppe zumindest teilweise auf und/oder neben einer weiteren Modulbaugruppe stapelbar bzw. lagerbar ist.

Eine Stapelung der Mehrzahl von Modulbaugruppen zumindest teilweise aufeinander und/oder nebeneinander umfasst vorzugsweise sowohl die eine Anordnung der Mehrzahl an Photovoltaikmodulen im Wesentlichen aufeinander als auch die Anordnung der Mehrzahl von Photovoltaikmodulen nebeneinander, wobei diese zumindest in einem gewissen Winkel, beispielsweise um zumindest 5° geneigt sind, so dass der zweite Verbindungsabschnitt auf der Oberfläche einer benachbarten Modulbaugruppe aufliegen kann.

Eine weitere bevorzugte Ausgestaltung ist dadurch gekennzeichnet, dass der erste Verbindungsabschnitt zumindest eine Ausnehmung zur Verbindung des Modulträgers mit der Mehrzahl von Photovoltaikmodulen aufweist. Dies ermöglicht eine in montagetechnischer Hinsicht günstige Verbindung zwischen dem zumindest einem Modulträger und der Mehrzahl von Photovoltaikmodulen.

Bevorzugt umfasst die Modulbaugruppe ferner zumindest ein Verbindungsmittel, wobei das zumindest eine Verbindungsmittel in der zumindest einen Ausnehmung des ersten Verbindungsabschnitts anordenbar ist. Mittels des zumindest einen Verbindungsmittels wird in vorteilhafter Weise eine Verbindung, insbesondere eine klemmbare Verbinndung, zwischen jeweils einem Photovoltaikmodul und dem zumindest einen Modulträger bzw. dem zumindest einen Montageprofil ermöglicht.

Eine bevorzugte Ausgestaltung ist dadurch gekennzeichnet, dass das zumindest eine Verbindungsmittel als zumindest ein Klemmmittel ausgebildet ist. Vorzugsweise ist das zumindest eine Klemmmittel im Wesentlichen als U-Profil umfassend zumindest zwei Schenkel ausgebildet, wobei die zumindest zwei Schenkel jeweils zumindest eine Aussparung aufweisen. Dies ermöglicht eine zuverlässige Verbindung zwischen der Mehrzahl von Photovoltaikmodulen und dem zumindest einen Modulträger bzw. dem zumindest einen Montageprofil. Vorzugsweise ist die zumindest eine Aussparung an den Stirnseiten der zwei Schenkel ausgebildet. Die inneren Seitenflächen der Aussparung weisen vorzugweise eine Riffelung auf, wodurch der Klemmeffekt des zumindest einen Klemmmittels verbessert werden kann.

Beispielsweise weist das zumindest eine Montageprofil zumindest eine Ausstellung und/oder zumindest eine Aussparung auf, in welcher das zumindest eine Verbindungsmittel, insbesondere das zumindest eine Klemmmittel angeordnet werden kann. Ebenfalls kann mittels der zumindest einen Ausstellung ein Potentialausgleich ermöglicht werden und/oder eine Rastfunktion bzw. Klemmfunktion wie das zumindest eine Verbindungsmittel ermöglicht werden.

Eine weitere bevorzugte Ausgestaltung ist dadurch gekennzeichnet, dass das zumindest eine Montageprofil, insbesondere der zweite Verbindungsabschnitt des zumindest einen Montageprofils, zumindest ein Haltemittel, insbesondere zumindest ein hakenförmiges Haltemittel, aufweist, insbesondere mit einem Haltemittel verbunden ist, wobei die zumindest eine Modulbaugruppe mittels des zumindest einen Haltemittels an zumindest einer Unterkonstruktion sicherbar ist. Insbesondere kann die zumindest eine Modulbaugruppe mittels des zumindest einen Haltemittels nach Ablage der zumindest einen Modulbaugruppe auf die Unterkonstruktion in ihrer Lage gesichert werden und eine seitliche Führung ermöglicht werden. Beispielsweise kann anschließend eine Endmontage der Modulbaugruppen auf der Unterkonstruktion manuell oder automatisiert durchgeführt werden.

Eine bevorzugte Ausgestaltung ist dadurch gekennzeichnet, dass sich der erste Verbindungsabschnitt und/oder der zweite Verbindungsabschnitt zumindest teilweise entlang einer Erstreckungsebene erstreckt, wobei die Erstreckungsebene im montierten Zustand der Modulbaugruppe im Wesentlichen der Ebene entspricht, in welcher sich die Mehrzahl von Photovoltaikmodulen im Wesentlichen erstrecken. Hierdurch weist der erste Verbindungsabschnitt einen Bereich auf, welcher als Anlagefläche für die einzelnen Photovoltaikmodule dient. Hinsichtlich des zweiten Verbindungsabschnitts kann ein Bereich zur Verfügung gestellt werden, welcher aufgrund seiner Erstreckungsrichtung eine Anlagefläche zum Stapeln der Mehrzahl von Photovoltaikmodulen aufeinander oder nebeneinander ermöglicht.

Eine bevorzugte Ausgestaltung ist dadurch gekennzeichnet, dass sich der erste Verbindungsabschnitt und/oder der zweite Verbindungsabschnitt zumindest teilweise orthogonal einer Erstreckungsebene erstreckt, wobei die Erstreckungsebene im montierten Zustand der Modulbaugruppe im Wesentlichen der Ebene entspricht, in welcher sich die Mehrzahl von Photovoltaikmodulen im Wesentlichen erstrecken.

Durch eine im Wesentlichen orthogonale Erstreckung des ersten Verbindungsabschnitts und/oder des zweiten Verbindungsabschnitts kann eine Anschlagsfläche zur Verfügung gestellt werden, welche eine Fixierung des zumindest einen Montageprofils zu dem jeweiligen Modulträgern bzw. den Modulträgern untereinander ermöglicht.

Eine bevorzugte Ausgestaltung ist dadurch gekennzeichnet, dass das Montageprofil einen dritten Verbindungsabschnitt aufweist, wobei der dritte Verbindungsabschnitt den ersten Verbindungsabschnitt und den zweiten Verbindungsabschnitt miteinander verbindet, wobei sich der dritte Verbindungsabschnitt zumindest teilweise schräg zu einer Erstreckungsebene erstreckt, wobei die Erstreckungsebene im montierten Zustand der Modulbaugruppe im Wesentlichen der Ebene entspricht, in welcher sich die Mehrzahl von Photovoltaikmodulen im Wesentlichen erstrecken. Durch Vorsehen des zumindest einen dritten Verbindungsabschnitts kann in konstruktiv günstiger Weise eine Beabstandung des ersten Verbindungsabschnitts zu dem zweiten Verbindungsabschnitt vorgesehen werden.

Beispielsweise kann das zumindest eine Montageprofil zur Verwirklichung des ersten Verbindungsabschnitts, des zweiten Verbindungsabschnitts und/oder des dritten Verbindungsabschnitts ein im Wesentlichen S-förmiges Querschnittsprofil, ein im Wesentlichen E-förmiges Querschnittsprofil oder ein im Wesentlichen W-förmiges Querschnittsprofil aufweisen.

Eine weitere bevorzugte Ausgestaltung ist dadurch gekennzeichnet, dass der zweite Verbindungsabschnitt zumindest ein Durchgangsloch umfasst, wobei der zweite Verbindungsabschnitt mittels des zumindest einen Durchgangslochs mit zumindest einer auf einem Untergrund befestigten Unterkonstruktion und/oder zur mit zumindest einer weiteren Modulbaugruppe verbindbar ist. Hierdurch wird eine zuverlässige Endmontagemöglichkeit der zumindest einen Modulbaugruppe auf zumindest einer Unterkonstruktion ermöglicht.

Eine weitere bevorzugte Ausgestaltung ist dadurch gekennzeichnet, dass die Mehrzahl von Photovoltaikmodulen an ihrer Unterseite jeweils zwei voneinander beabstandete Befestigungsprofile aufweist, wobei die Modulbaugruppe zumindest zwei Modulträger umfasst, und wobei jeweils ein erster Verbindungsabschnitt eines Montageprofils eines Modulträgers mit einem Befestigungsprofil der Mehrzahl von Photovoltaikmodulen verbindbar ist. Hierdurch wird eine zuverlässige Montage der Mehrzahl von Photovoltaikmodulen mit dem zumindest einen Modulträger ermöglicht.

Gemäß einem dritten Aspekt wird die vorgenannte Aufgabe gelöst durch zumindest einen Modulträger, wobei der zumindest eine Modulträger zumindest ein vorgenanntes Montageprofil umfasst.

Gemäß einem vierten Aspekt wird die vorgenannte Aufgabe gelöst durch zumindest ein System umfassend eine Mehrzahl von vorgenannten Modulbaugruppen.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden. Die Reihenfolge der einzelnen Schritte in den dargestellten Verfahrensübersichten gibt nicht notwendigerweise die tatsächliche (zeitliche) Reihenfolge der Schritte vor und ist lediglich beispielhaft. Nichtsdestotrotz können die Schritte zeitlich in genau der Abfolge auftreten/durchgeführt werden, wie sie in den dargestellten Verfahrensübersichten dargestellt sind. Darüber hinaus können, müssen sie aber nicht in Reaktion aufeinander durchgeführt werden.

Es zeigen:
- Fig. 1a: ein erstes Ausführungsbeispiel eines Verfahrens zur Montage einer Mehrzahl von Photovoltaikmodulen auf zumindest einem Untergrund in einer schematischen Darstellung;
- Fig. 1b: ein zweites Ausführungsbeispiel eines Verfahrens zur Montage einer Mehrzahl von Photovoltaikmodulen auf zumindest einem Untergrund in einer schematischen Darstellung;
- Fig. 2: ein drittes Ausführungsbeispiel eines Verfahrens zur Montage einer Mehrzahl von Photovoltaikmodulen auf zumindest einem Untergrund in einer schematischen Darstellung;
- Fig. 3: eine perspektivische Ansicht eines Ausführungsbeispiels einer Mehrzahl von Modulbaugruppen auf einer Unterkonstruktion;
- Fig. 4: ein Detail einer Schnittansicht entlang der in Fig. 3 dargestellten Schnittlinie IV;
- Fig. 5: eine perspektivische Ansicht eines Ausführungsbeispiels einer Mehrzahl von Modulbaugruppen auf einem Gestell einer Transporteinheit;
- Fig. 6: eine Schnittansicht entlang der in Fig. 5 dargestellten Schnittlinie VI;
- Fig. 7a: eine perspektivische Darstellung einer Unterseite einer Modulbaugruppe in einer schematischen Ansicht;
- Fig. 7b: eine Detailansicht des in Fig. 7a gezeigten Details VII b;
- Fig. 7c: eine Schnittansicht entlang der in Fig. 7a dargestellten Schnittlinie VII c;
- Fig. 8a: eine Schnittansicht eines erstens Ausführungsbeispiels eines Montageprofils;
- Fig. 8b: eine Schnittansicht eines zweiten Ausführungsbeispiels eines Montageprofils;
- Fig. 8c: eine Schnittansicht eines dritten Ausführungsbeispiels eines Montageprofils;
- Fig. 8d: eine Schnittansicht eines vierten Ausführungsbeispiels eines Montageprofils; und
- Fig. 8e: eine Schnittansicht eines fünften Ausführungsbeispiels eines Montageprofils.

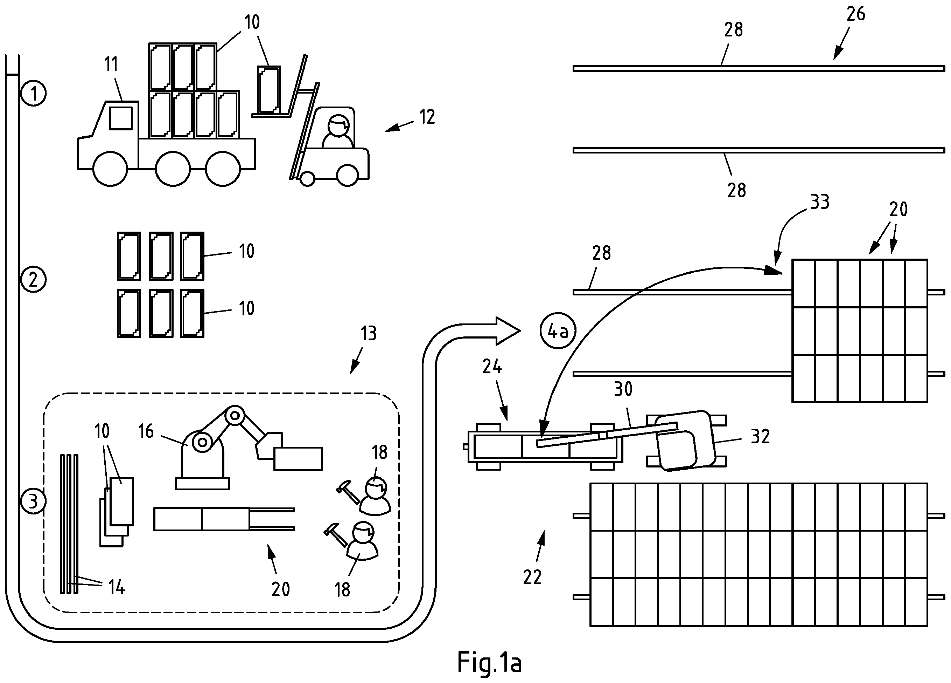

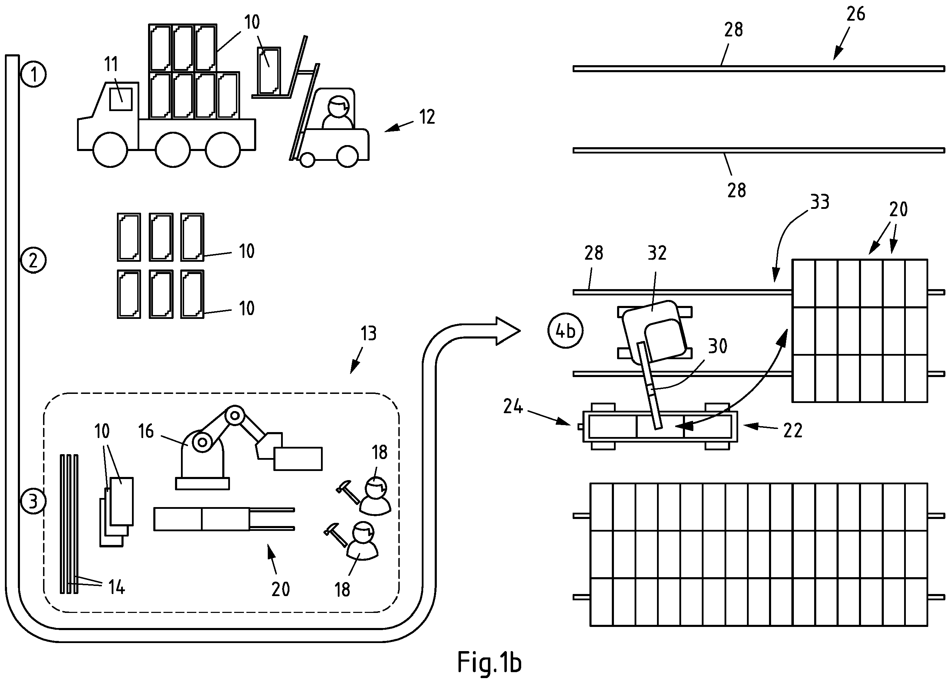

Fig. 1 a zeigt ein erstes Ausführungsbeispiel eines Verfahrens zur Montage einer Mehrzahl von Photovoltaikmodulen 10 auf zumindest einem Untergrund in einer schematischen Darstellung.

In einem ersten Schritt 1 werden zunächst die einzelnen Photovoltaikmodule 10 bspw. mittels eines LKWs 11 angeliefert. Diese sind zunächst noch verpackt. Anschließend werden die angelieferten Photovoltaikmodule 10 zunächst bspw. mittels eines Gabelstaplers 12 entladen und können in einem nachfolgenden optionalen Schritt 2 gelagert werden.

Anschließend werden die angelieferten Photovoltaikmodule 10 in einem Schritt 3 in einer sogenannten "Field Factory" 13 vormontiert. Hierzu wird neben der Mehrzahl von Photovoltaikmodulen 10 eine Mehrzahl an Modulträgern 14 der Field Factory 13 zugeführt, so dass Mehrzahl von Photovoltaikmodulen 10 und Mehrzahl von Modulträgern 14 in der Field Factory 13 vormontiert werden können. Die Vormontage in der Field Factory 13 kann beispielsweise mittels eines Manipulationsroboters 16 und zusätzlich zumindest teilweise manuell durch Arbeiter 18 durchgeführt werden. In der Field Factory 13 werden die Mehrzahl von Photovoltaikmodulen 10 und Mehrzahl von Modulträgern 14 zu Modulbaugruppen 20 vormontiert. Dargestellt ist eine Modulbaugruppe 20, bei welcher gerade das letzte Photovoltaikmodul 10 montiert wird.

Nachfolgend wird eine Mehrzahl von vormontierten Modulbaugruppen 20 mittels einer Transporteinheit 22 zu einer Vor-(Montageposition) 24 transportiert. An der Vormontageposition 24 wird die Mehrzahl von Modulbaugruppen 20 im Rahmen eines Schritts 4a auf einer Unterkonstruktion 26 montiert.

Die Unterkonstruktion 26 weist im Wesentlichen zwei sich in Längsrichtung erstreckende Längsträger 28 auf. Die Mehrzahl von Modulbaugruppen 20 wird mittels eines Manipulators 30 eines Verlegefahrzeugs 32 von der Transporteinheit 22 entnommen und zu einer (End-)Montageposition 33 transportiert. Es ist erkennbar, dass das Verlegefahrzeug 32 hierzu seitlich außerhalb der beiden Längsträger 28 fährt. Anschließend legt der Manipulator 30 die jeweilige Modulbaugruppe 20 auf der Unterkonstruktion 26 in der Endmontageposition 33 ab.

Das in Fig. 1b dargestellte Verfahren entspricht im Wesentlichen dem in Fig. 1a dargestellten Verfahren zur Montage einer Mehrzahl von Photovoltaikmodulen, wobei das Verlegefahrzeug 32 in Schritt 4b nicht seitlich außerhalb der beiden Längsträger 28 verfährt, sondern vielmehr innerhalb der beiden Längsträger 28 verfährt. Ansonsten sind die beiden dargestellten Verfahren im Wesentlichen identisch.

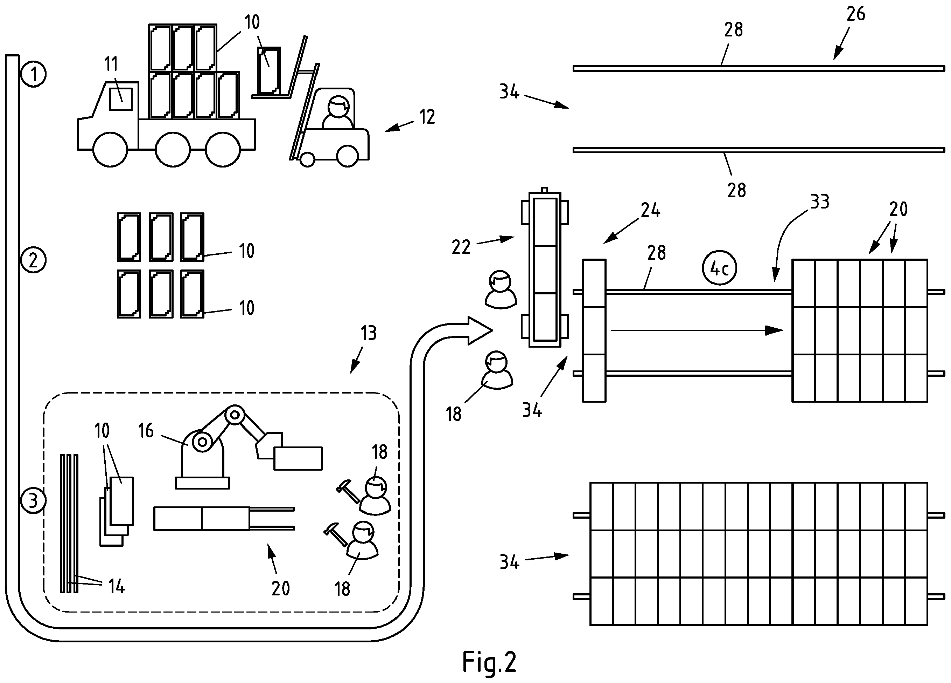

Fig. 2 zeigt ein drittes Ausführungsbeispiel eines Verfahrens zur Montage einer Mehrzahl von Photovoltaikmodulen 10 auf zumindest einem Untergrund in einer schematischen Darstellung. Die Montage der Mehrzahl von Modulbaugruppen 20 auf der zumindest einen Unterkonstruktion 26 unterscheidet sich von den Ausführungsbeispielen in Fig. 1a und 1b durch Schritt 4c. Denn die Modulbaugruppen 20 werden zunächst an einer Vormontageposition 24 an einer Stirnseite 34 der Unterkonstruktion 26 abgelegt. Dies kann beispielsweise mittels eines Manipulators oder manuell mittels der Arbeiter 18 durchgeführt werden. Anschließend werden die Modulbaugruppen 20 von der Vormontageposition 24 zumindest teilweise mittels der Unterkonstruktion 26 zu der jeweiligen Endmontageposition 33 transportiert.

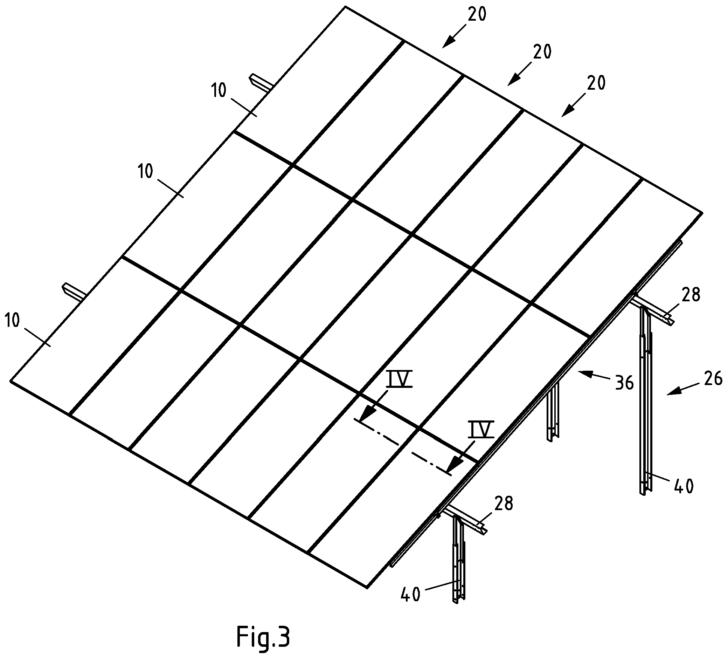

Fig. 3 zeigt eine perspektivische Ansicht eines Ausführungsbeispiels einer Mehrzahl von Modulbaugruppen 20 in einem auf einer Unterkonstruktion 26 montierten Zustand. Die Mehrzahl an Modulbaugruppen 20 umfasst jeweils drei Photovoltaikmodule 10. Die Mehrzahl an Modulbaugruppen 20 sind mittels Modulträgern 36 umfassend jeweils zwei Montageprofile 38 auf Längsträgern 28 einer Unterkonstruktion 26 montiert. Die Längsträger 28 sind mittels einer Mehrzahl an Pfosten 40 in einem nicht näher dargestellten Untergrund befestigt.

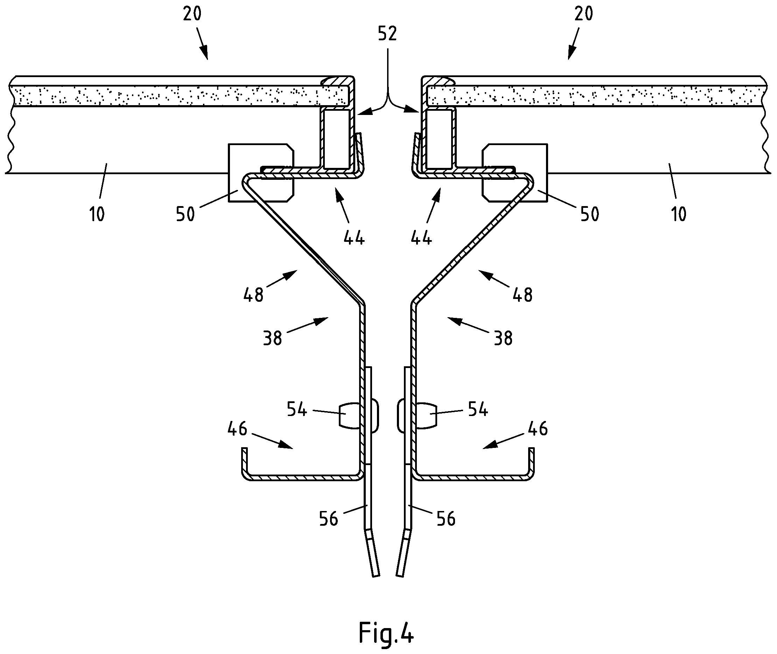

Fig. 4 zeigt ein Detail einer Schnittansicht entlang der in Fig. 3 dargestellten Schnittlinie IV-IV. Dieser lässt sich der Aufbau der einer Modulbaugruppe 20 entnehmen. An der Längsseite einer Modulbaugruppe 20 ist jeweils ein Montageprofil 38 eines Modulträgers 36 angeordnet. Das Montageprofil 38 umfasst einen ersten Verbindungsabschnitt 44 zur Verbindung des Montageprofils 38 mit (Befestigungs-) Profilen 52 der Photovoltaikmodule 10, einen zweiten Verbindungsabschnitt 46 zur Verbindung des Montageprofils 38 mit der Unterkonstruktion 26 sowie einen dritten Verbindungsabschnitt 48 zur Verbindung des ersten Verbindungsabschnitts 44 mit dem zweiten Verbindungsabschnitt 46.

Der erste Verbindungsabschnitt 44 des Montageprofils 38 ist mittels eines Verbindungsmittels 50 in Form einer Klemme an einem Profil 52 eines Photovoltaikmoduls 10 befestigt. Ferner weist der zweite Verbindungsabschnitt 46 des Montageprofil 38 ein Durchgangsloch auf, an welchem mittels eines Verbindungselements 54 ein hakenförmiges Haltemittel 56 verbunden ist, wobei die eine Modulbaugruppe 20 mittels des zumindest einen Haltemittels 56 an der Unterkonstruktion 26 sicherbar ist.

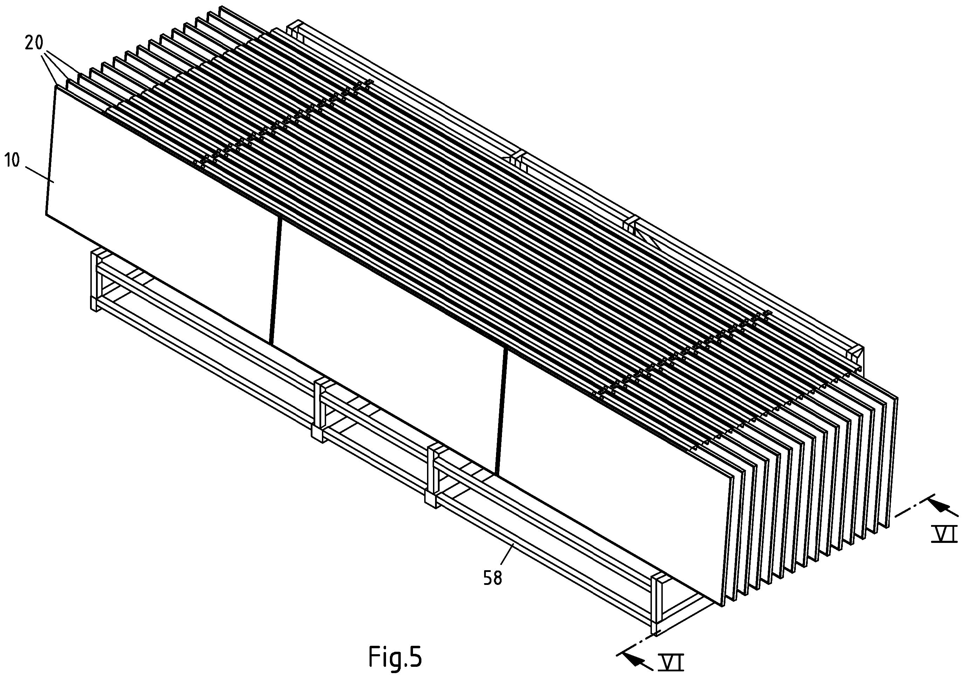

Fig. 5 zeigt eine perspektivische Ansicht eines Ausführungsbeispiels einer Mehrzahl von Modulbaugruppen 20 auf einem Gestell 58, welches beispielsweise auf einer Transporteinheit 22 angeordnet werden kann.

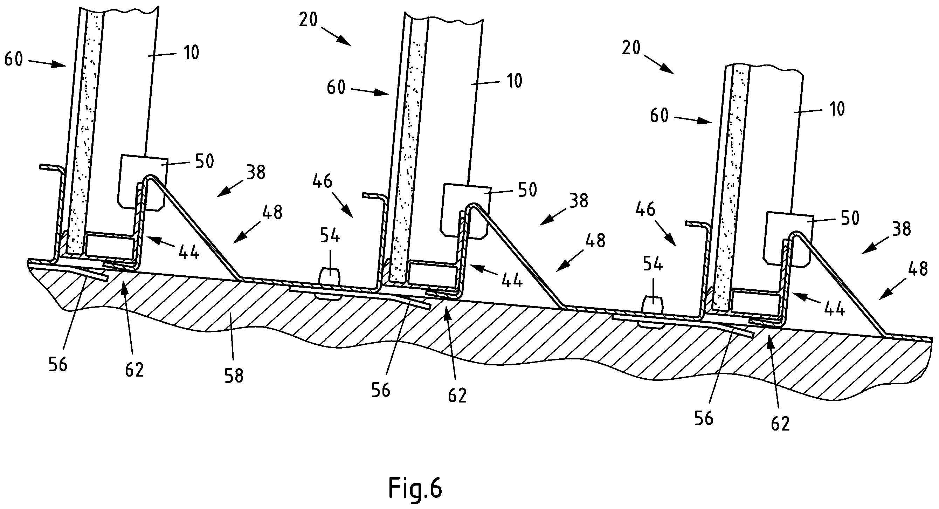

Fig. 6 zeigt eine Schnittansicht entlang der in Fig. 5 dargestellten Schnittlinie VI. Es ist erkennbar, dass der zweite Verbindungsabschnitt 46 und das Haltemittel 56 derart ausgebildet sind, dass diese auf einer Oberfläche 60 bzw. einer Seitenfläche 62 einer benachbarten Modulbaugruppe 20, insbesondere auf einer Oberfläche 60 bzw. einer Seitenfläche 62 von benachbarten Photovoltaikmodulen 10, aufliegen, so dass die einzelnen Modulbaugruppen 20 aufeinander bzw. nebeneinander stapelbar sind.

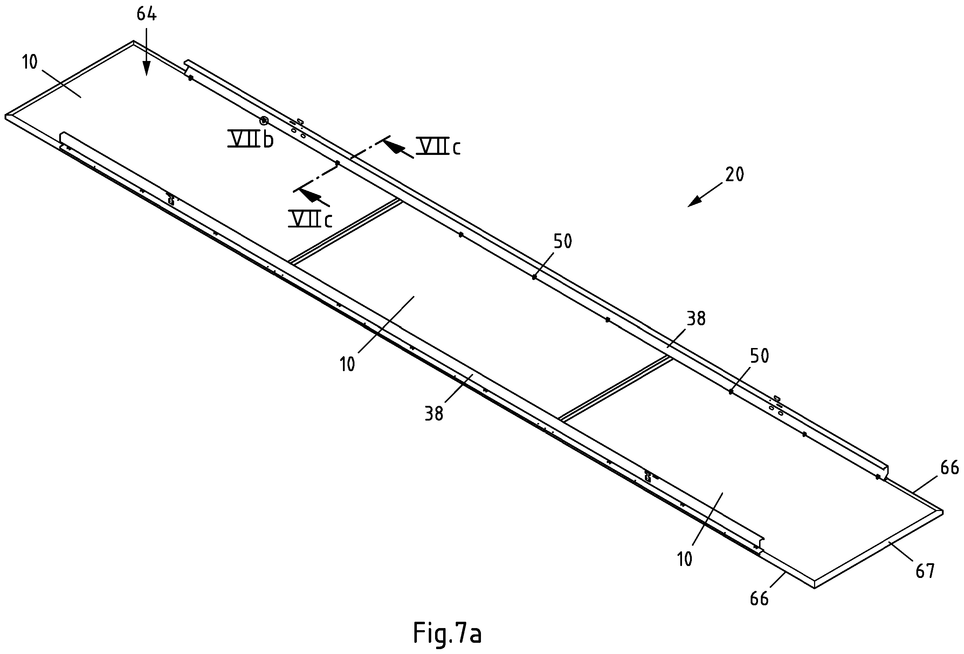

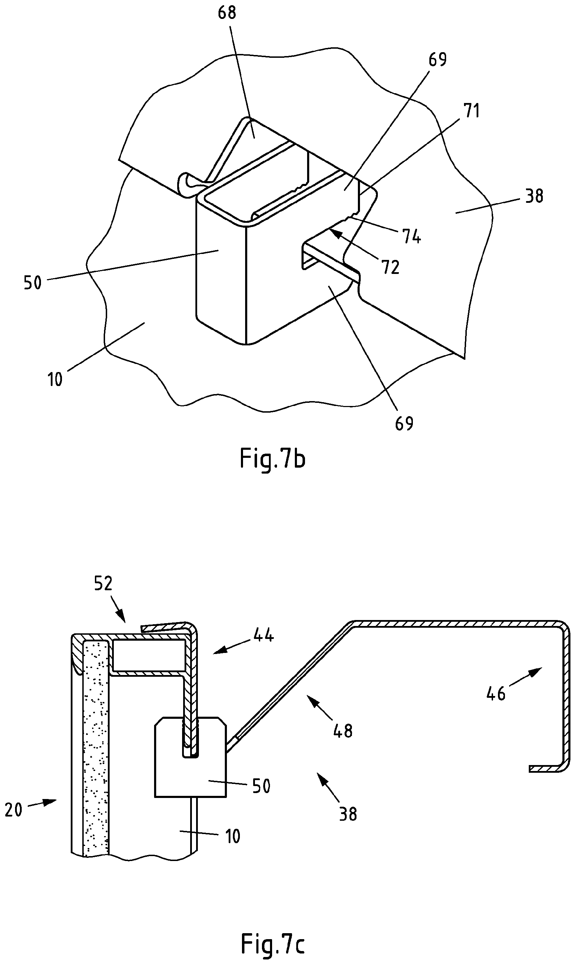

Fig. 7a zeigt eine perspektivische Darstellung einer Unterseite 64 einer Modulbaugruppe 20. Wie zuvor bereits beschrieben, umfasst die Modulbaugruppe 20 drei Photovoltaikmodule 10 sowie zwei Montageprofile 38, wobei sich die Montageprofile 38 an den äußeren Längsseiten 66 der Modulbaugruppe 20 in Längsrichtung der Modulbaugruppe 20 erstrecken. Vorzugsweise spannen die Längsseiten 66 und die Querseiten 67 der Modulbaugruppe 20 eine Erstreckungsebene der Modulbaugruppe 20 auf.

Wie in Fig. 7b dargestellt, weisen die Montageprofile 38 Ausnehmungen 68 zur Aufnahme der Verbindungsmittel 50 auf. Das Verbindungsmittel 50 weist ein U-förmiges Profil mit zwei Schenkeln 69 auf, wobei das Verbindungsmittel an einer Stirnseite 71 der Schenkel 69 jeweils eine Aussparung 72 aufweist. Die inneren Seitenflächen der Aussparung 72 weisen ferner eine Riffelung 74 auf, wodurch der Klemmeffekt des zumindest einen Klemmmittels/Verbindungsmittels 50 verbessert werden kann.

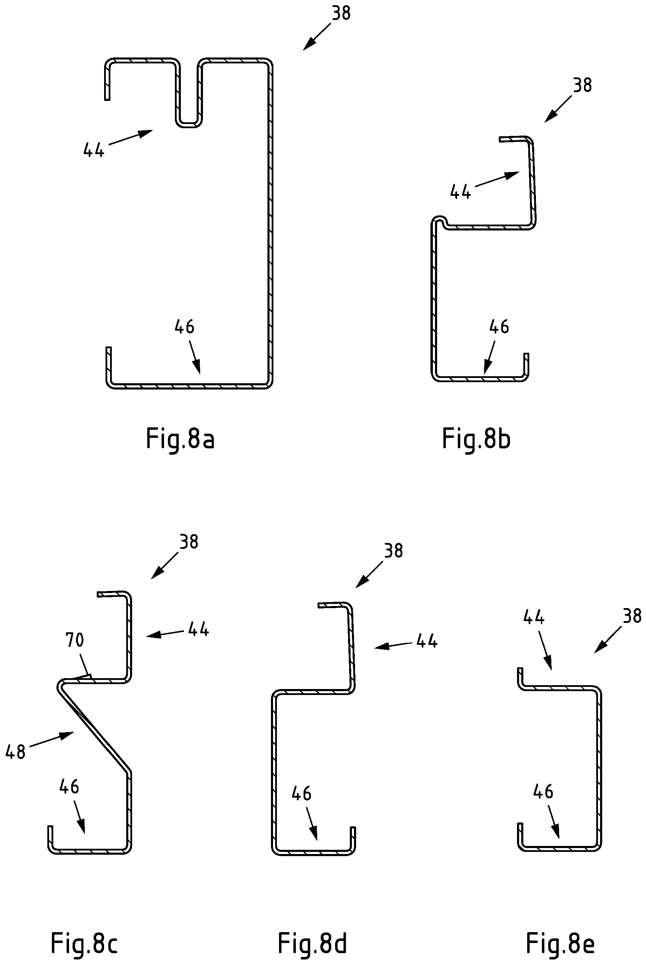

In den Fig. 8a bis 8e sind Schnittansichten von weiteren Ausführungsbeispielen eines Montageprofils 38 dargestellt. Beispielsweise weisen die Montageprofile 38 ein im Wesentlichen E-förmiges Querschnittsprofil auf (Fig. 8c), wobei dieses zu einem herkömmlichen E gespiegelt ist. Zusätzlich weist das in Fig. 8c dargestellte Querschnittsprofil eine Ausstellung 70 zur Befestigung eines Verbindungsmittels 50 oder für einen Potentialausgleich auf. Hinsichtlich der detaillierten Ausgestaltung der weiteren, in den Fig. 8a bis 8e gezeigten Ausführungsbeispielen wird auf die Figuren verwiesen.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar. Alle Offenbarungen in dieser Spezifikation sind im Hinblick auf alle Kategorien Vorrichtung, Verfahren, Computerprogramm zu verstehen, sodass beispielsweise mit der Beschreibung eines Verfahrensschritt auch eine entsprechende Vorrichtung offenbart ist, die Mittel zur Ausführung und/oder Steuerung des Verfahrensschritts umfasst, und eine entsprechende Vorrichtung, die dazu eingerichtet ist den Verfahrensschritt zu steuern und/oder auszuführen.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichenliste

- 1: Erster Schritt des Montageverfahrens
- 2: Zweiter, optionaler Schritt des Montageverfahrens
- 3: Dritter Schritt des Montageverfahrens
- 4: Vierter Schritt des Montageverfahrens
- 10: Photovoltaikmodul
- 11: LKW
- 12: Gabelstapler
- 13: Field Factory
- 14: Modulträger
- 16: Manipulationsroboter
- 18: Arbeiter
- 20: Modulbaugruppe
- 22: Transporteinheit
- 24: Vormontageposition
- 26: Unterkonstruktion
- 28: Längsträger
- 30: Manipulator
- 32: Verlegefahrzeug
- 33: Endmontageposition
- 34: Stirnseite der Unterkonstruktion
- 36: Modulträger
- 38: Montageprofil
- 40: Pfosten
- 44: erster Verbindungsabschnitt
- 46: zweiter Verbindungsabschnitt
- 48: dritten Verbindungsabschnitt
- 50: Verbindungsmittel
- 52: Profil eines Photovoltaikmoduls
- 54: Verbindungselement
- 56: Haltemittel
- 58: Gestell einer Transporteinheit
- 60: Oberfläche einer Modulbaugruppe
- 62: Seitenfläche einer Modulbaugruppe
- 64: Unterseite einer Modulbaugruppe
- 66: Längsseite einer Modulbaugruppe
- 67: Querseite einer Modulbaugruppe
- 68: Ausnehmung eines Montageprofils
- 69: Schenkel des Verbindungsmittels
- 70: Ausstellung eines Montageprofils
- 71: Stirnseite des Verbindungsmittel
- 72: Aussparung des Verbindungsmittels
- 74: Riffelung des Verbindungsmittels

## Patentansprüche

1. Verfahren zur Montage einer Mehrzahl von Photovoltaikmodulen auf zumindest einem Untergrund umfassend die nachfolgenden Schritte:
- Bereitstellen einer Mehrzahl von Photovoltaikmodulen sowie einer Mehrzahl von Modulträgern; wobei ein Modulträger jeweils mindestens ein Montageprofil umfasst;
- Vormontage der Mehrzahl von Photovoltaikmodulen und der Mehrzahl von Modulträgern zu einer Mehrzahl von Modulbaugruppen; wobei eine Modulbaugruppe jeweils eine Mehrzahl von Photovoltaikmodulen und zumindest einen Modulträger umfasst; und wobei die Mehrzahl von Photovoltaikmodulen mittels des zumindest einen Modulträgers, insbesondere mittels des mindestens einen Montageprofils des zumindest einen Modulträgers, miteinander verbunden werden;
- Lagerung, insbesondere gestapelte Lagerung, der Mehrzahl von Modulbaugruppen auf mindestens einer Transporteinheit; wobei die Montageprofile der Mehrzahl von Modulträgern derart ausgestaltet sind, dass die Mehrzahl von Modulbaugruppen zumindest teilweise aufeinander und/oder nebeneinander stapelbar sind; und
- Transport der Mehrzahl von Modulbaugruppen, insbesondere mittels der mindestens einen Transporteinheit, zu mindestens einer Montageposition;
- Montage der Mehrzahl von Modulbaugruppen auf zumindest einer auf einem Untergrund befestigten Unterkonstruktion.

2. Verfahren nach Anspruch 1, wobei die Vormontage ferner umfasst:
- zumindest teilweise automatisierte Vormontage der Mehrzahl von Photovoltaikmodulen und der Mehrzahl von Modulträgern zu einer Mehrzahl von Modulbaugruppen mittels zumindest eines Manipulationsroboters; wobei vorzugsweise die Mehrzahl von Photovoltaikmodulen und/oder die Mehrzahl von Modulträgern eine Indexierung aufweist, wobei die Position der Mehrzahl von Photovoltaikmodulen und/oder der Mehrzahl von Modulträgern mittels einer Erfassung der Indexierung durch zumindest ein Sensormittel erkannt wird;
- vorzugsweise automatisierte Bestückung einer Vormontagestation mittels des zumindest einen Manipulationsroboters; wobei insbesondere die Mehrzahl von Modulträgern und/oder die Mehrzahl von Photovoltaikmodulen der Vormontagestation mittels des Manipulationsroboters automatisiert zugeführt wird.

3. Verfahren nach Anspruch 1 oder 2, wobei die Vormontage ferner umfasst:
- Verbinden der Mehrzahl von Photovoltaikmodulen und der Mehrzahl von Modulträgern zu einer Mehrzahl von Modulbaugruppen mittels einer formschlüssigen, kraftschlüssigen und/oder reibschlüssigen Verbindung, insbesondere mittels einer Mehrzahl von Verbindungsmitteln; und/oder
- Automatisierte Zuführung der Mehrzahl von Verbindungsmitteln, insbesondere mittels eines vorkonfektionierten Magazins.

4. Verfahren nach einem der Ansprüche 1 bis 3, wobei die Vormontage ferner umfasst:
- Erfassen der Mehrzahl von Photovoltaikmodulen und/oder der Mehrzahl von Modulträgern; und
- Vergleichen der erfassten Mehrzahl von Photovoltaikmodulen und/oder der erfassten Mehrzahl von Modulträgern mit in einer Datenbank gespeicherten Referenzwerten; und
- optionales Ausgeben eines Fehlersignals, falls die erfassten Abmaße der Mehrzahl von Photovoltaikmodulen und/oder die erfassten Abmaße der Mehrzahl von Modulträgern außerhalb der in der Datenbank gespeicherten Referenzwerte liegen.

5. Verfahren nach einem der Ansprüche 1 bis 4, wobei die Vormontage ferner umfasst:
- Einschieben und/oder Auflegen der Mehrzahl von Photovoltaikmodulen in zumindest ein Montageprofil, insbesondere in zumindest zwei Montageprofile;
- wobei die Mehrzahl von Photovoltaikmodulen vorzugweise nach Einschieben und/oder Auflegen dieser im Wesentlichen formschlüssig fixiert werden; und/oder
- wobei die Mehrzahl von Photovoltaikmodulen vorzugweise durch Eindrehen des zumindest einen Montageprofils um eine Achse in Einschubrichtung des zumindest einen Montageprofils im Wesentlichen formschlüssig fixiert werden.

6. Verfahren nach einem der Ansprüche 1 bis 5,
- wobei die Mehrzahl von Modulbaugruppen mittels zumindest eines Verlegefahrzeugs auf der zumindest einen Unterkonstruktion montiert werden,
- wobei das zumindest eine Verlegefahrzeug vorzugsweise die Mehrzahl von Modulbaugruppen auf der mindestens einen Transporteinheit im Wesentlichen automatisiert erkennt;
- wobei zumindest ein Manipulator des zumindest einen Verlegefahrzeugs vorzugsweise die Mehrzahl von Modulbaugruppen im Wesentlichen automatisiert von der mindestens einen Transporteinheit entnimmt, und/oder
- wobei der zumindest eine Manipulator die Mehrzahl von Modulbaugruppen insbesondere mittels zumindest einem Vakuumsaugelement, mittels form- und kraftschlüssiger mechanischer Verbindung und/oder mittels Magnetkraft von der mindestens einen Transporteinheit entnimmt.

7. Verfahren nach einem der Ansprüche 1 bis 6,
- wobei das zumindest eine Verlegefahrzeug die mindestens eine Montageposition und/oder die zumindest Unterkonstruktion erfasst,
- wobei der zumindest eine Manipulator mindestens eine Modulbaugruppe zu der Montageposition transportiert,
- wobei das zumindest eine Verlegefahrzeug vorzugsweise mit dem zumindest einen Manipulator gekoppelt ist, insbesondere elektronisch oder mechanisch gekoppelt ist, und
- wobei der zumindest eine Manipulator die mindestens eine Modulbaugruppe in der Montageposition auf der Unterkonstruktion ablegt.

8. Verfahren nach einem der Ansprüche 1 bis 7,
- wobei die Mehrzahl von Modulbaugruppen manuell und/oder automatisiert kraftschlüssig, stoffschlüssig und/oder reibschlüssig an der zumindest einen Unterkonstruktion befestigt wird.

9. Verfahren nach einem der Ansprüche 1 bis 8,
- wobei die Modulbaugruppen jeweils an einer Montageposition auf der Unterkonstruktion ablegtwerden,
- wobei die Modulbaugruppen nachfolgend von der Montageposition zu der Endmontageposition zumindest teilweise mittels der Unterkonstruktion transportiert werden.

10. Verfahren nach einem der Ansprüche 1 bis 9,
- wobei die zumindest eine Transporteinheit die Mehrzahl der Modulbaugruppen entlang einer länglichen Erstreckung der zumindest einen Unterkonstruktion transportiert,
- wobei die Modulbaugruppen an ihrer Endmontageposition auf der Unterkonstruktion abgelegt werden.

11. Modulbaugruppe umfassend:
- eine Mehrzahl von Photovoltaikmodulen (10) und
- zumindest einen Modulträger (14, 36), wobei der zumindest eine Modulträger (14, 36) zumindest ein Montageprofil (38) umfasst,
- wobei das Montageprofil (38) einen ersten Verbindungsabschnitt (44) zur Verbindung des Montageprofils (38) mit der Mehrzahl von Photovoltaikmodulen (10) aufweist, und
- wobei das Montageprofil (38) einen zweiten Verbindungsabschnitt (46) zur Verbindung des Montageprofils (38) mit zumindest einer auf einem Untergrund befestigten Unterkonstruktion (26) aufweist,
**dadurch gekennzeichnet,**
- **dass** der zweite Verbindungsabschnitt (46) derart ausgestaltet ist, dass dieser auf der Oberfläche einer Mehrzahl von Photovoltaikmodulen (10), insbesondere auf der Oberfläche einer Mehrzahl von Photovoltaikmodulen (10) einer weiteren Modulbaugruppe (20), stapelbar ist.

12. Modulbaugruppe nach Anspruch 11,
- wobei der erste Verbindungsabschnitt (44) zumindest eine Ausnehmung (68, 70) zur Verbindung des Modulträgers (14, 36) mit der Mehrzahl von Photovoltaikmodulen (10) aufweist,
- wobei die Modulbaugruppe (20) ferner zumindest ein Verbindungsmittel (50) umfasst und
- wobei das zumindest eine Verbindungsmittel (50) in der zumindest einen Ausnehmung (68, 70) des ersten Verbindungsabschnitts (44) anordenbar ist.

13. Modulbaugruppe nach Anspruch 12,
- wobei das zumindest eine Verbindungsmittel (50) als zumindest ein Klemmmittel ausgebildet ist,
- wobei das zumindest eine Klemmmittel (50) im Wesentlichen als U-Profil umfassend zumindest zwei Schenkel (69) ausgebildet ist,
- wobei die zumindest zwei Schenkel (69) jeweils zumindest eine Aussparung (72) aufweisen.

14. Modulbaugruppe nach einem der Ansprüche 11 bis 13,
- wobei das zumindest eine Montageprofil (38) zumindest ein Haltemittel (56), insbesondere zumindest ein hakenförmiges Haltemittel (56), aufweist,
- wobei die zumindest eine Modulbaugruppe (20) mittels des zumindest einen Haltemittels (56) an zumindest einer Unterkonstruktion (26) sicherbar ist.

15. Modulbaugruppe nach einem der Ansprüche 12 bis 14,
- wobei sich der erste Verbindungsabschnitt (44) und/oder der zweite Verbindungsabschnitt (46) zumindest teilweise entlang einer Erstreckungsebene erstreckt, und/oder
- wobei sich der erste Verbindungsabschnitt (44) und/oder der zweite Verbindungsabschnitt (46) zumindest teilweise orthogonal einer Erstreckungsebene erstreckt, und/oder
- wobei das Montageprofil (38) einen dritten Verbindungsabschnitt (48) aufweist, wobei der dritte Verbindungsabschnitt (48) den ersten Verbindungsabschnitt (44) und den zweiten Verbindungsabschnitt (46) miteinander verbindet, wobei sich der dritte Verbindungsabschnitt (48) vorzugsweise zumindest teilweise schräg zu einer Erstreckungsebene erstreckt,
- wobei die Erstreckungsebene im montierten Zustand der Modulbaugruppe (20) im Wesentlichen der Ebene entspricht, in welcher sich die Mehrzahl von Photovoltaikmodulen (10) und/oder die Modulbaugruppe (20) im Wesentlichen erstrecken.

16. Modulbaugruppe nach einem der Ansprüche 11 bis 15,
- wobei der zweite Verbindungsabschnitt (46) zumindest ein Durchgangsloch umfasst, wobei der zweite Verbindungsabschnitt (46) mittels des zumindest einen Durchgangslochs mit zumindest einer auf einem Untergrund befestigten Unterkonstruktion (26) und/oder zur mit zumindest einer weiteren Modulbaugruppe (20) verbindbar ist, und/oder
- wobei die Mehrzahl von Photovoltaikmodulen (10) an ihrer Unterseite (64) jeweils zwei voneinander beabstandete Befestigungsprofile (52) aufweist, wobei die Modulbaugruppe (20) zumindest zwei Modulträger (14, 36) umfasst, und wobei jeweils ein erster Verbindungsabschnitt (44) eines Montageprofils (38) eines Modulträgers (14, 36) mit einem Befestigungsprofil (52) der Mehrzahl von Photovoltaikmodulen (10) verbindbar ist.

## Geänderte Patentansprüche

### Geänderte Patentansprüche gemäss Regel 137(2) EPÜ.

1. Verfahren zur Montage einer Mehrzahl von Photovoltaikmodulen (10) auf zumindest einem Untergrund umfassend die nachfolgenden Schritte:
- Bereitstellen einer Mehrzahl von Photovoltaikmodulen (10) sowie einer Mehrzahl von Modulträgern (14, 36); wobei ein Modulträger (14, 36) jeweils mindestens ein Montageprofil (38) umfasst;
- Vormontage der Mehrzahl von Photovoltaikmodulen (10) und der Mehrzahl von Modulträgern (14, 36) zu einer Mehrzahl von Modulbaugruppen; wobei eine Modulbaugruppe jeweils eine Mehrzahl von Photovoltaikmodulen und zumindest einen Modulträger (14, 36) umfasst; und wobei die Mehrzahl von Photovoltaikmodulen mittels des zumindest einen Modulträgers (14, 36), insbesondere mittels des mindestens einen Montageprofils (38) des zumindest einen Modulträgers (14, 36), miteinander verbunden werden;
- Lagerung, insbesondere gestapelte Lagerung, der Mehrzahl von Modulbaugruppen (20) auf mindestens einer Transporteinheit (22);
- Transport der Mehrzahl von Modulbaugruppen (20), insbesondere mittels der mindestens einen Transporteinheit (22), zu mindestens einer Montageposition; und
- Montage der Mehrzahl von Modulbaugruppen (20) auf zumindest einer auf einem Untergrund befestigten Unterkonstruktion (36);
**dadurch gekennzeichnet,**
- **dass** die Montageprofile (38) der Mehrzahl von Modulträgern (14, 36) derart ausgestaltet sind, dass die Mehrzahl von Modulbaugruppen (20) zumindest teilweise aufeinander und/oder nebeneinander stapelbar sind;
- wobei die Vormontage ferner umfasst:
- zumindest teilweise automatisierte Vormontage der Mehrzahl von Photovoltaikmodulen (10) und der Mehrzahl von Modulträgern (14, 36) zu einer Mehrzahl von Modulbaugruppen (20) mittels zumindest eines Manipulationsroboters (16).

2. Verfahren nach Anspruch 1, wobei die Vormontage ferner **dadurch gekennzeichnet ist,**
- **dass** die Mehrzahl von Photovoltaikmodulen (10) und/oder die Mehrzahl von Modulträgern (14, 36) eine Indexierung aufweist, wobei die Position der Mehrzahl von Photovoltaikmodulen (10) und/oder der Mehrzahl von Modulträgern (14, 36) mittels einer Erfassung der Indexierung durch zumindest ein Sensormittel erkannt wird;
- vorzugsweise automatisierte Bestückung einer Vormontagestation mittels des zumindest einen Manipulationsroboters (16); wobei insbesondere die Mehrzahl von Modulträgern (14, 36) und/oder die Mehrzahl von Photovoltaikmodulen (10) der Vormontagestation mittels des Manipulationsroboters (16) automatisiert zugeführt wird.

3. Verfahren nach Anspruch 1 oder 2, wobei die Vormontage ferner umfasst:
- Verbinden der Mehrzahl von Photovoltaikmodulen (10) und der Mehrzahl von Modulträgern (14, 36) zu einer Mehrzahl von Modulbaugruppen (20) mittels einer formschlüssigen, kraftschlüssigen und/oder reibschlüssigen Verbindung, insbesondere mittels einer Mehrzahl von Verbindungsmitteln (50); und/oder
- Automatisierte Zuführung der Mehrzahl von Verbindungsmitteln (50), insbesondere mittels eines vorkonfektionierten Magazins.

4. Verfahren nach einem der Ansprüche 1 bis 3, wobei die Vormontage ferner umfasst:
- Erfassen der Mehrzahl von Photovoltaikmodulen (10) und/oder der Mehrzahl von Modulträgern (14, 36); und
- Vergleichen der erfassten Mehrzahl von Photovoltaikmodulen (10) und/oder der erfassten Mehrzahl von Modulträgern (14, 36) mit in einer Datenbank gespeicherten Referenzwerten; und
- optionales Ausgeben eines Fehlersignals, falls die erfassten Abmaße der Mehrzahl von Photovoltaikmodulen (10) und/oder die erfassten Abmaße der Mehrzahl von Modulträgern (14, 36) außerhalb der in der Datenbank gespeicherten Referenzwerte liegen.

5. Verfahren nach einem der Ansprüche 1 bis 4, wobei die Vormontage ferner umfasst:
- Einschieben und/oder Auflegen der Mehrzahl von Photovoltaikmodulen (10) in zumindest ein Montageprofil (38), insbesondere in zumindest zwei Montageprofile (38);
- wobei die Mehrzahl von Photovoltaikmodulen (10) vorzugweise nach Einschieben und/oder Auflegen dieser im Wesentlichen formschlüssig fixiert werden; und/oder
- wobei die Mehrzahl von Photovoltaikmodulen (10) vorzugweise durch Eindrehen des zumindest einen Montageprofils (38) um eine Achse in Einschubrichtung des zumindest einen Montageprofils (38) im Wesentlichen formschlüssig fixiert werden.

6. Verfahren nach einem der Ansprüche 1 bis 5,
- wobei die Mehrzahl von Modulbaugruppen (20) mittels zumindest eines Verlegefahrzeugs (32) auf der zumindest einen Unterkonstruktion (26) montiert werden,
- wobei das zumindest eine Verlegefahrzeug (32) vorzugsweise die Mehrzahl von Modulbaugruppen (20) auf der mindestens einen Transporteinheit (22) im Wesentlichen automatisiert erkennt;
- wobei zumindest ein Manipulator (30) des zumindest einen Verlegefahrzeugs (32) vorzugsweise die Mehrzahl von Modulbaugruppen (20) im Wesentlichen automatisiert von der mindestens einen Transporteinheit (22) entnimmt, und/oder
- wobei der zumindest eine Manipulator (30) die Mehrzahl von Modulbaugruppen (20) insbesondere mittels zumindest einem Vakuumsaugelement, mittels form- und kraftschlüssiger mechanischer Verbindung und/oder mittels Magnetkraft von der mindestens einen Transporteinheit (22) entnimmt.

7. Verfahren nach einem der Ansprüche 1 bis 6,
- wobei das zumindest eine Verlegefahrzeug (32) die mindestens eine Montageposition und/oder die zumindest Unterkonstruktion (26) erfasst,
- wobei der zumindest eine Manipulator (30) mindestens eine Modulbaugruppe (20) zu der Montageposition transportiert,
- wobei das zumindest eine Verlegefahrzeug (32) vorzugsweise mit dem zumindest einen Manipulator (30) gekoppelt ist, insbesondere elektronisch oder mechanisch gekoppelt ist, und
- wobei der zumindest eine Manipulator (30) die mindestens eine Modulbaugruppe (20) in der Montageposition auf der Unterkonstruktion (26) ablegt.

8. Verfahren nach einem der Ansprüche 1 bis 7,
- wobei die Mehrzahl von Modulbaugruppen (20) manuell und/oder automatisiert kraftschlüssig, stoffschlüssig und/oder reibschlüssig an der zumindest einen Unterkonstruktion (26) befestigt wird.

9. Verfahren nach einem der Ansprüche 1 bis 8,
- wobei die Modulbaugruppen (20) jeweils an einer Montageposition auf der Unterkonstruktion (26) ablegtwerden,
- wobei die Modulbaugruppen (20) nachfolgend von der Montageposition zu der Endmontageposition (33) zumindest teilweise mittels der Unterkonstruktion (26) transportiert werden.

10. Verfahren nach einem der Ansprüche 1 bis 9,
- wobei die zumindest eine Transporteinheit (22) die Mehrzahl der Modulbaugruppen (20) entlang einer länglichen Erstreckung der zumindest einen Unterkonstruktion (26) transportiert,
- wobei die Modulbaugruppen (20) an ihrer Endmontageposition (33) auf der Unterkonstruktion (26) abgelegt werden.

11. Modulbaugruppe umfassend:
- eine Mehrzahl von Photovoltaikmodulen (10) und
- zumindest einen Modulträger (14, 36), wobei der zumindest eine Modulträger (14, 36) zumindest ein Montageprofil (38) umfasst,
- wobei das Montageprofil (38) einen ersten Verbindungsabschnitt (44) zur Verbindung des Montageprofils (38) mit der Mehrzahl von Photovoltaikmodulen (10) aufweist, und
- wobei das Montageprofil (38) einen zweiten Verbindungsabschnitt (46) zur Verbindung des Montageprofils (38) mit zumindest einer auf einem Untergrund befestigten Unterkonstruktion (26) aufweist,
**dadurch gekennzeichnet,**
- **dass** der zweite Verbindungsabschnitt (46) derart ausgestaltet ist, dass dieser auf der Oberfläche einer Mehrzahl von Photovoltaikmodulen (10), insbesondere auf der Oberfläche einer Mehrzahl von Photovoltaikmodulen (10) einer weiteren Modulbaugruppe (20), stapelbar ist,
- wobei das Montageprofil (38) an einer Längsseite der Modulbaugruppe (20) angeordnet ist.

12. Modulbaugruppe nach Anspruch 11,
- wobei der erste Verbindungsabschnitt (44) zumindest eine Ausnehmung (68, 70) zur Verbindung des Modulträgers (14, 36) mit der Mehrzahl von Photovoltaikmodulen (10) aufweist,
- wobei die Modulbaugruppe (20) ferner zumindest ein Verbindungsmittel (50) umfasst und
- wobei das zumindest eine Verbindungsmittel (50) in der zumindest einen Ausnehmung (68, 70) des ersten Verbindungsabschnitts (44) anordenbar ist.

13. Modulbaugruppe nach Anspruch 12,
- wobei das zumindest eine Verbindungsmittel (50) als zumindest ein Klemmmittel ausgebildet ist,
- wobei das zumindest eine Klemmmittel (50) im Wesentlichen als U-Profil umfassend zumindest zwei Schenkel (69) ausgebildet ist,
- wobei die zumindest zwei Schenkel (69) jeweils zumindest eine Aussparung (72) aufweisen.

14. Modulbaugruppe nach einem der Ansprüche 11 bis 13,
- wobei das zumindest eine Montageprofil (38) zumindest ein Haltemittel (56), insbesondere zumindest ein hakenförmiges Haltemittel (56), aufweist,
- wobei die zumindest eine Modulbaugruppe (20) mittels des zumindest einen Haltemittels (56) an zumindest einer Unterkonstruktion (26) sicherbar ist.

15. Modulbaugruppe nach einem der Ansprüche 12 bis 14,
- wobei sich der erste Verbindungsabschnitt (44) und/oder der zweite Verbindungsabschnitt (46) zumindest teilweise entlang einer Erstreckungsebene erstreckt, und/oder
- wobei sich der erste Verbindungsabschnitt (44) und/oder der zweite Verbindungsabschnitt (46) zumindest teilweise orthogonal einer Erstreckungsebene erstreckt, und/oder
- wobei das Montageprofil (38) einen dritten Verbindungsabschnitt (48) aufweist, wobei der dritte Verbindungsabschnitt (48) den ersten Verbindungsabschnitt (44) und den zweiten Verbindungsabschnitt (46) miteinander verbindet, wobei sich der dritte Verbindungsabschnitt (48) vorzugsweise zumindest teilweise schräg zu einer Erstreckungsebene erstreckt,
- wobei die Erstreckungsebene im montierten Zustand der Modulbaugruppe (20) im Wesentlichen der Ebene entspricht, in welcher sich die Mehrzahl von Photovoltaikmodulen (10) und/oder die Modulbaugruppe (20) im Wesentlichen erstrecken.

16. Modulbaugruppe nach einem der Ansprüche 11 bis 15,
- wobei der zweite Verbindungsabschnitt (46) zumindest ein Durchgangsloch umfasst, wobei der zweite Verbindungsabschnitt (46) mittels des zumindest einen Durchgangslochs mit zumindest einer auf einem Untergrund befestigten Unterkonstruktion (26) und/oder zur mit zumindest einer weiteren Modulbaugruppe (20) verbindbar ist, und/oder
- wobei die Mehrzahl von Photovoltaikmodulen (10) an ihrer Unterseite (64) jeweils zwei voneinander beabstandete Befestigungsprofile (52) aufweist, wobei die Modulbaugruppe (20) zumindest zwei Modulträger (14, 36) umfasst, und wobei jeweils ein erster Verbindungsabschnitt (44) eines Montageprofils (38) eines Modulträgers (14, 36) mit einem Befestigungsprofil (52) der Mehrzahl von Photovoltaikmodulen (10) verbindbar ist.
